# FASCICULE DE BREVET EUROPEEN

(11) **EP 2 743 729 B1**
(45) Date de publication et mention de la délivrance du brevet: **13.07.2022**
(21) Numéro de dépôt: 13196515.4
(22) Date de dépôt: 10.12.2013
(51) Int. Cl.: G01S 19/22

(54) **Procédé et système de détection d'anomalie sur des signaux de navigation par satellites et système d'hybridation comportant un tel système de détection**
Verfahren und System zur Erkennung von Anomalien bei satellitenübertragenen Navigationssignalen, und Hybridsystem, das ein solches Erkennungssystem umfasst
Method and system for detecting anomalies in satellite navigation signals and hybridisation system comprising such a detection system

(30) Priorité: 14.12.2012 FR 1203406
(43) Date de publication de la demande: 18.06.2014
(73) Titulaire: Thales, 92400 Courbevoie (FR)
(72) Inventeur: Kubrak, Damien, 31400 Toulouse (FR); Serant, Damien, 31037 Toulouse (FR)
(74) Mandataire: Marks & Clerk France

(56) Documents cités:
- WO-A1-2004/031797
- US-A1- 2005 114 023
- US-B1- 6 198 765

## Description

La présente invention concerne un procédé et un système de détection d'anomalie sur des signaux de navigation par satellites et un système d'hybridation comportant un tel système de détection. Elle s'applique à tout système de positionnement par satellites utilisant des récepteurs de positionnement par satellite de type GNSS (Global Navigation Satellite System) tels que des récepteurs GPS (Global Positioning System) ou Galileo et en particulier aux récepteurs GNSS terrestres.

Dans un système de positionnement par satellites utilisant un récepteur de positionnement par satellite de type GNSS disposé à bord d'un véhicule terrestre, maritime ou aérien, les signaux de données permettant au récepteur de calculer son positionnement proviennent de différents satellites appartenant à une constellation de satellites de positionnement. La constellation comporte au moins quatre satellites pour déterminer quatre inconnues correspondant aux coordonnées géographiques x, y, z et temporelles t du récepteur. Le positionnement du véhicule par le récepteur est réalisé en deux étapes. Dans une première étape, le récepteur fait l'acquisition de signaux radioélectriques constituant des signaux de navigation provenant des quatre satellites de la constellation et dans une deuxième étape, le récepteur évalue les distances séparant le véhicule des quatre satellites dont les signaux ont été reçus et détermine la position du véhicule en utilisant un procédé par trilatération.

Une erreur commise sur la position d'un véhicule peut avoir des conséquences désastreuses dans une application concernant l'aviation civile ou le péage routier géo-localisé.

Il existe de nombreuses sources d'erreur de positionnement pouvant entacher la validité des informations de position déterminées par un système de positionnement par satellite. Une erreur de positionnement peut être due à un problème technique sur la réception des signaux GNSS, tel que par exemple une défaillance du récepteur, ou une défaillance des informations transmises par la constellation de satellites, ou une panne d'un satellite. La fiabilité de la position déterminée par un système de positionnement par satellite dépend également de l'environnement dans lequel se trouve le véhicule et une erreur de positionnement peut aussi être due notamment à une réflexion parasite sur un bâtiment, ou à une interférence sur le signal.

Dans le cas d'une application aéronautique, le récepteur n'est contraint par aucun obstacle, de sorte que les signaux radioélectriques sont reçus directement des satellites, sans réflexion sur aucune paroi. Dans ce cas, il existe des systèmes SBAS (en anglais : Satellite-Based Augmentation Systems) permettant de fournir une information de confiance relative à la position calculée par le récepteur d'un véhicule aéronautique. Les systèmes SBAS contrôlent et bornent en permanence les erreurs commises sur l'orbite des satellites, sur la synchronisation de chaque satellite avec la référence horaire des constellations et les erreurs induites par la propagation des signaux radioélectriques en haute atmosphère et en particulier dans l'Ionosphère. Les informations fournies par un système SBAS permettent au récepteur du véhicule aéronautique de fournir la position du véhicule ainsi qu'une borne d'erreur de position.

Dans le cas d'une application aéronautique, il est également connu d'utiliser un équipement hybride INS/GNSS (Inertial Navigation System/ Global Navigation Satellite System) combinant les informations fournies par une centrale inertielle et les mesures fournies par le système de navigation par satellites incluant un récepteur GNSS, pour obtenir des informations de position et de vitesse du véhicule. Les architectures d'hybridation INS/GNSS peuvent utiliser différents types de couplage entre un récepteur GNSS et une centrale inertielle. Le couplage peut être réalisé soit à partir de la position calculée du récepteur GNSS, soit à partir des mesures brutes de la fréquence ou des pseudo-distances déterminées à partir des signaux de navigation reçus des satellites, soit à partir d'informations encore plus élémentaires calculées dans le récepteur, ce dernier type de couplage étant appelé couplage de type ultra-serré (en anglais : ultra-tight coupling). La centrale inertielle fournit des informations peu bruitées et précises à court terme mais la précision des mesures se dégrade sur le long terme en raison des dérives des capteurs inertiels. La précision des mesures fournies par le récepteur GNSS permet de maîtriser la dérive inertielle et les mesures inertielles permettent de filtrer le bruit sur les mesures du récepteur GNSS. Cet équipement calcule également des rayons de protection autour de la position calculée qui permettent de contenir l'erreur de position à un risque d'intégrité donné. Les rayons de protection peuvent être calculés en utilisant un filtre de canal, par exemple un filtre de Kalman, qui comporte un modèle du comportement du récepteur GNSS et fournit une estimation d'une information de distance et de vitesse du récepteur. Un paramètre, appelé innovation, correspondant à l'écart entre la mesure de l'information de distance fournie par le satellite et l'estimation de cette information de distance fournie en sortie du filtre de canal est alors calculé. Lorsque le comportement du récepteur correspond au modèle inclus dans le filtre, le paramètre innovation a une valeur proche de zéro. Dans le cas contraire, la mesure GNSS est erronée. Le paramètre innovation permet donc, dans le cas d'une application aéronautique, d'identifier des mesures GNSS affectées de larges erreurs, pouvant survenir notamment lorsqu'un satellite est en panne.

Les applications de péage routier géo-localisé consistent à déterminer la route empruntée par un véhicule terrestre muni d'un récepteur GNSS et à facturer un utilisateur du véhicule terrestre lorsque la route empruntée est soumise à un péage. La facturation dépendant de la route utilisée, le récepteur doit délivrer deux informations complémentaires concernant d'une part, la position du véhicule et d'autre part, la trajectoire du véhicule. Ces informations donnant lieu à une facturation, il est également nécessaire de déterminer une information de confiance concernant la trajectoire utilisée.

L'intégrité d'une position GNSS en milieu contraint, par exemple urbain, zone boisée, zone montagneuse, est difficile à caractériser, notamment en raison de l'imprécision de la modélisation des phénomènes locaux de propagation. L'identification et la caractérisation de la qualité des mesures GNSS produites par un récepteur en est d'autant plus difficile. Actuellement, le contrôle d'intégrité d'une position GNSS d'un véhicule terrestre est réalisé de la même façon que pour l'aviation civile. Lorsque la navigation s'effectue dans un milieu non contraint, par exemple en campagne ou dans une ville peu dense, cette méthode est efficace. Cependant, dans le cas d'une navigation en milieu contraint, les conditions de réception des signaux radioélectriques sont beaucoup plus complexes et beaucoup moins maitrisées que dans le cas d'une application aéronautique et les signaux reçus sont beaucoup plus bruités et d'intensité beaucoup plus faible. Les modèles d'erreur conçus pour les applications de l'aviation civile ne correspondent donc pas aux milieux contraints et il n'est pas possible d'identifier clairement la position d'un véhicule terrestre sur une voie de circulation. Par ailleurs, pour un milieu contraint, aucun indicateur de qualité de mesures GNSS fiable n'est actuellement disponible.

Le but de l'invention est de proposer un procédé et un système de détection d'anomalie sur des signaux de navigation par satellites permettant de détecter une anomalie sur des signaux de navigation reçus par un récepteur de positionnement par satellite en n'importe quel milieu, non contraint ou contraint, même lorsque les signaux sont de faible intensité et fortement bruités.

Pour cela, l'invention concerne un procédé de détection d'anomalie sur des signaux de navigation reçus par N canaux de réception d'un récepteur de positionnement par satellites, où N est un nombre entier supérieur à 1, chaque canal i, où i est compris entre 1 et N, comportant un circuit de corrélation de porteuse, un circuit de corrélation de code incluant des corrélateurs ponctuel, avance et retard, un discriminateur de code, un discriminateur de phase de porteuse, les discriminateurs de code et de phase de porteuse étant connectés à un filtre de canal commun apte à gérer, conjointement, la position des corrélateurs ponctuel, avance et retard des N canaux de réception pour réduire des valeurs d'erreur de code et de phase de porteuse délivrées par les discriminateurs de code et de phase de porteuse. Le procédé consiste à extraire les valeurs d'erreur de code délivrées en sortie des N discriminateurs de code, à comparer les valeurs d'erreur de code extraites à une même première valeur de seuil correspondant à une valeur d'erreur de code maximale acceptable, à extraire des valeurs d'erreur de phase de porteuse délivrées en sortie des N discriminateurs de phase de porteuse, à comparer les valeurs d'erreur de phase de porteuse extraites à une même deuxième valeur de seuil correspondant à une valeur d'erreur de phase maximale acceptable et à attribuer un indice de confiance à chaque signal de navigation reçu sur chaque canal de réception, l'indice de confiance dépendant des résultats de la comparaison réalisée sur les valeurs d'erreur de code et sur les valeurs d'erreur de phase de porteuse, et à sélectionner des signaux de navigation ayant un indice de confiance supérieur à un niveau de confiance minimal de référence et à transmettre au filtre de canal uniquement les signaux de navigation sélectionnés.

L'invention concerne également un système de détection d'anomalie sur des signaux de navigation comportant un récepteur de positionnement par satellite à N canaux de réception, où N est un nombre entier supérieur à 1, chaque canal i, où i est compris entre 1 et N, comportant un circuit de corrélation de porteuse, un circuit de corrélation de code incluant des corrélateurs ponctuel, avance et retard, un discriminateur de code, un discriminateur de phase de porteuse, les discriminateurs de code et de phase de porteuse étant connectés à un filtre de canal commun apte à gérer, conjointement, la position des corrélateurs ponctuel, avance et retard des N canaux de réception pour réduire des valeurs d'erreur de code et de phase de porteuse délivrées par les discriminateurs de code et de phase de porteuse. Le système comporte en outre un dispositif de détection d'anomalie sur les signaux de navigation comportant au moins un dispositif de comparaison comportant un premier ensemble de N comparateurs respectivement connectés en sortie des N discriminateurs de code des N canaux du récepteur et un dispositif d'attribution d'un indice de confiance de fiabilité connecté en sortie des N comparateurs du dispositif de comparaison, le dispositif de comparaison incluant une première valeur de seuil correspondant à une valeur d'erreur de code maximale acceptable, le dispositif de comparaison comportant en outre un deuxième ensemble de N comparateurs respectivement connectés en sortie des N discriminateurs de phase de porteuse des N canaux du récepteur et le dispositif d'attribution d'un indice de confiance de fiabilité est connecté en sortie du premier et du deuxième ensemble de N comparateurs, du dispositif de comparaison, le dispositif de comparaison incluant en outre une deuxième valeur de seuil correspondant à une valeur d'erreur de phase de porteuse maximale acceptable et l'indice de confiance étant attribué à chaque signal de navigation reçu sur chaque canal de réception en fonction du résultat de la comparaison réalisée sur les valeurs d'erreur de code et sur les valeurs d'erreur de phase de porteuse et délivré par le dispositif de comparaison, le dispositif de détection d'anomalie étant connecté entre les discriminateurs du récepteur et le filtre de canal et le dispositif de détection d'anomalie comporte en outre un dispositif de sélection des signaux de navigation, le dispositif de sélection étant connecté en sortie du dispositif d'attribution de l'indice de fiabilité et en entrée du filtre de canal, le dispositif de sélection des signaux de navigation étant apte à sélectionner les signaux de navigation ayant un indice de confiance supérieur au niveau de confiance minimal de référence et à transmettre au filtre de canal uniquement les valeurs d'erreur de code et les valeurs d'erreur de phase de porteuse des signaux de navigation sélectionnés.

L'invention concerne aussi un système d'hybridation INS/GNSS comportant un système de détection d'anomalie sur des signaux de navigation selon la définition précédente et une centrale inertielle.

D'autres particularités et avantages de l'invention apparaîtront clairement dans la suite de la description donnée à titre d'exemple purement illustratif et non limitatif, en référence aux dessins schématiques annexés qui représentent :
- figure 1 : un schéma simplifié d'un exemple d'architecture d'un récepteur GNSS dans lequel un seul canal est représenté, selon l'art antérieur;
- figure 2 : un schéma d'un premier exemple d'architecture d'un système de réception GNSS comportant un récepteur GNSS intégré dans une architecture de boucle vectorisée, selon l'art antérieur ;
- figure 3 : un schéma d'un deuxième exemple d'architecture d'un système de réception GNSS comportant un récepteur GNSS intégré dans une architecture d'hybridation INS/GNSS, selon l'invention;
- figures 4a et 4b : deux courbes illustrant l'évolution, en fonction du temps, des paramètres innovation délivrés en sortie d'un filtre de Kalman d'une architecture d'hybridation de type couplage ultra-serré, selon l'art antérieur ;
- figures 5a et 5b : deux exemples d'architecture d'un système de détection d'anomalie sur des signaux de navigation GNSS, la figure 5a ne couvrant pas un exemple couvert par la présente invention ;
- figure 6 : un schéma d'un troisième exemple d'architecture d'un système de détection d'anomalie sur des signaux de navigation GNSS, selon l'invention ;
- figure 7 : un exemple d'algorithme de détection d'anomalie et de sélection des signaux GNSS fiables, selon l'invention ;
- figure 8 : un exemple d'architecture d'hybridation incluant un dispositif de détection d'anomalie et de sélection des signaux GNSS fiables, selon l'invention ;
- figure 9 : un exemple de courbe illustrant l'évolution, en fonction du temps des sorties des discriminateurs de code d'un récepteur GNSS, le récepteur GNSS étant intégré dans une architecture d'hybridation de type couplage ultra-serré, selon l'invention.

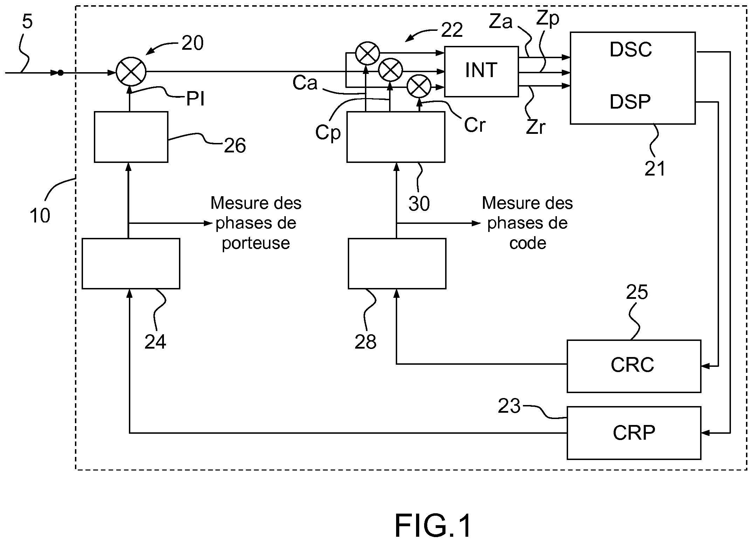

Les signaux de navigation émis par les satellites d'une constellation sont des signaux radioélectriques composés des données à transmettre étalées en fréquence par un code d'étalement binaire pseudo-aléatoire et transposées dans une bande de fréquence d'émission par modulation avec une porteuse d'émission. Le récepteur de positionnement par satellite de type GNSS comporte plusieurs canaux de traitement différents permettant de traiter en parallèle les signaux reçus de satellites différents. Deux satellites différents ont des codes différents et décorrélés qui permettent de dissocier les signaux entre les satellites et d'allouer un canal différent à chaque satellite. La figure 1 représente un schéma simplifié d'un exemple d'architecture d'un récepteur de positionnement par satellite dans lequel un seul canal est représenté. En réception, les données contenues dans chaque signal 5 reçu par le récepteur 10 de positionnement par satellite sont extraites par deux démodulations successives réalisées par un circuit de corrélation de porteuse 20 destiné à la suppression de la porteuse du signal reçu, suivi d'un circuit de corrélation de code 22. Pour cela, le récepteur 10 de positionnement par satellite élabore une réplique locale PI de la porteuse engendrée par un oscillateur local 24 piloté par une boucle de poursuite en fréquence et en phase, appelée boucle de phase 20, et une réplique locale du code d'étalement pseudo-aléatoire engendrée par un générateur de code local 28 piloté par une boucle de poursuite en retard, appelée boucle de code 22. Les techniques de poursuite du signal reçu nécessitent d'élaborer une réplique locale du code d'étalement, appelée réplique ponctuelle Cp, et d'autres répliques locales en avance Ca et en retard Cr. Les intégrateurs INT ont pour rôle de produire des échantillons de signal démodulé et désétalé, cumulé, avance Za, ponctuel Zp, retard Zr. Lorsqu'une boucle de code 22 est accrochée, le code engendré localement est en phase avec le code contenu dans le signal reçu du satellite et la fonction de corrélation obtenue correspond à un maximum. La boucle de phase 20, respectivement la boucle de code 22, comporte un discriminateur 21 de porteuse DSP et de code DSC, permettant de mesurer, à l'aide des valeurs des échantillons de signal Zp, Za, Zr délivrés par l'intégrateur INT en sortie des corrélateurs ponctuel avance et retard, les écarts de phase de porteuse, respectivement les écarts de code, entre le signal reçu et le signal local, pour rétro-action dans les boucles de poursuite de phase et de code 20, 22 correspondantes afin de mettre à jour l'estimation de la fréquence porteuse du signal reçu, respectivement le décalage du code d'étalement mesuré par rapport au code local.

En sortie du discriminateur 21 de porteuse DSP et de code DSC, les écarts de phase de porteuse sont transmis à un correcteur de porteuse CRP 23 contrôlant un oscillateur de porteuse 24 générant une phase locale de porteuse pilotant un générateur de porteuse 26 qui fournit la porteuse locale utilisée par le circuit de corrélation de porteuse 20 pour la suppression de la porteuse du signal reçu. De même, En sortie du discriminateur 21, les écarts de code sont transmis à un correcteur de code CRC 25 contrôlant un oscillateur de code 28 générant une phase locale de code pilotant le générateur de code 30 qui fournit des codes locaux Ca, Cp, Cr utilisés par le circuit de corrélation de code 22. Dans une architecture classique de récepteur de positionnement par satellite, la sortie de chaque discriminateur 21 est contrainte, par la boucle de poursuite de code 22, à délivrer une valeur proche de zéro pour conserver la synchronisation du code local sur le code du satellite.

La synchronisation des codes locaux est donc réalisée satellite par satellite indépendamment des autres satellites. Lorsque le récepteur GNSS est utilisé seul, il est très difficile d'identifier un signal de navigation erroné et l'information de position obtenue n'est pas fiable.

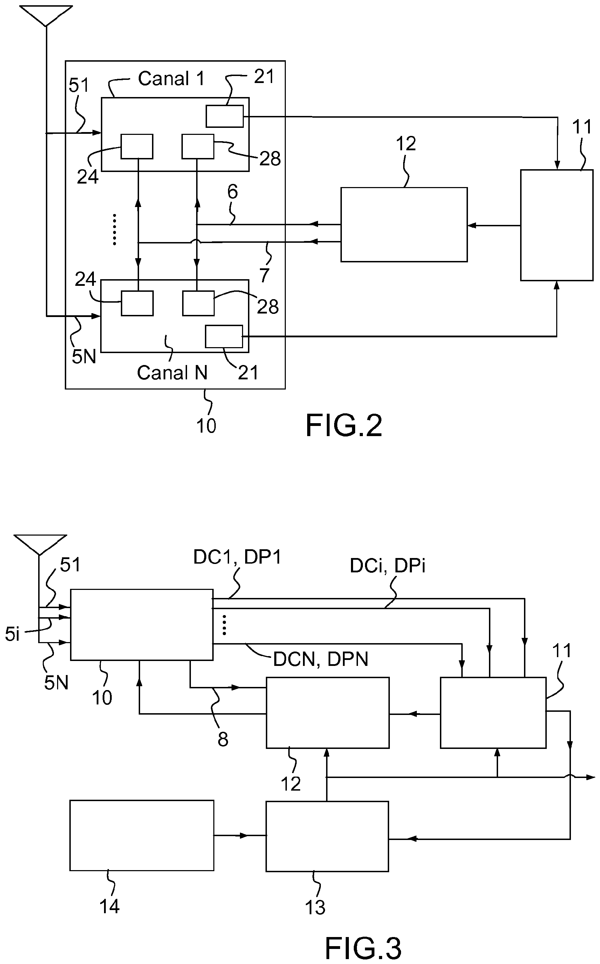

Le récepteur 10 peut être intégré dans une architecture de type boucle vectorisée, comme représenté par exemple sur le schéma de la figure 2, ou dans une architecture d'hybridation INS/GNSS comme représenté par exemple sur le schéma de la figure 3. Dans ces deux types d'architecture, les mesures de position et de vitesse du récepteur 10 sont déterminées en prenant en compte des résidus d'erreur d'un paramètre innovation délivré en sortie d'un filtre de canal 11, par exemple un filtre de Kalman.

Dans le cas de l'architecture de boucle vectorisée représentée sur la figure 2, le filtre de canal 11, par exemple un filtre de Kalman, prend en compte l'ensemble des informations extraites des N signaux de navigation 51,...5N reçus par le récepteur 10 pour calculer le paramètre innovation correspondant à la différence entre les mesures rapportées par le récepteur 10 et la prédiction de ces mesures réalisées par un modèle mathématique inclus dans le filtre de canal 11 et en déduire une estimation du décalage des horloges de code et de porteuse du récepteur 10 par rapport aux N satellites ayant émis les N signaux 51 à 5N. Le décalage de code, respectivement le décalage de porteuse, délivré en sortie du filtre de canal 11 est appliqué en entrée d'un dispositif 12 de prédiction de l'effet Doppler sur le code et la porteuse, cet effet Doppler étant dû au mouvement des satellites, au mouvement de l'oscillateur local du récepteur et au mouvement du récepteur 10. Le dispositif 12 de prédiction de l'effet Doppler délivre en sortie des nouvelles valeurs de commande de position des horloges de code et de phase qui sont appliquées aux oscillateurs locaux 28 des boucles de code, respectivement aux oscillateurs locaux 24 des boucles de phase, des N canaux du récepteur 10 afin de mettre à jour, simultanément, les horloges de code et de phase de tous les canaux à partir d'une seule et même valeur de commande de code 6, respectivement de phase 7. Le démarrage des codes d'étalement locaux utilisés pour la corrélation est ainsi déclenché simultanément dans tous les canaux. Cette architecture de boucle vectorisée permet donc de prendre en compte conjointement, un ensemble d'informations issues des discriminateurs 21 de tous les canaux du récepteur 10 pour corriger simultanément par une même valeur, à chaque itération, la position des corrélateurs ponctuel Cp, avance Ca et retard Cr, dans tous les canaux fiables du récepteur 10. Dans cette architecture de boucle vectorisée, la position des corrélateurs de tous les canaux est donc gérée en commun par le filtre de canal 11 et les signaux de sortie des discriminateurs 21 de code et de porteuse, ne sont pas contraints.

Dans le cas de l'architecture d'hybridation INS/GNSS représentée sur la figure 3 qui concerne un couplage de type ultra serré, outre les informations extraites de l'ensemble des signaux de navigation par le récepteur 10 de positionnement par satellite pour calculer le paramètre innovation, le filtre de canal 11 prend également en compte des informations de position, de vitesse et d'accélération, transmises par une centrale inertielle 14 placée à bord du véhicule dans lequel se situe le récepteur 10. A partir de l'ensemble des informations extraites des signaux de navigation 51,..., 5i, ..., 5N, et des informations issues de la centrale inertielle 14, le filtre de canal 11 estime conjointement la nouvelle position des corrélateurs ponctuel Cp, avance Ca et retard Cr de tous les canaux, 1 à N, du récepteur 10. Un calculateur de navigation 13 connecté en sortie de la centrale inertielle 14, reçoit des informations de position délivrées par la centrale inertielle 14 et des informations d'erreur de position, de vitesse et d'accélération estimées par le filtre de canal 11 à partir des valeurs d'erreur DC1, DP1,..., DCi, DPi,..., DCN, DPN, issues des discriminateurs 21 de chaque canal 1,...i,..., N, du récepteur 10. A partir des informations provenant de la centrale inertielle 14 et du filtre de canal 11, le calculateur de navigation 13 délivre des nouvelles valeurs de position, de vitesse et d'attitude du véhicule dans lequel se situe le récepteur 10 et la centrale inertielle 14. Ces nouvelles valeurs de position, de vitesse et d'attitude sont appliquées à l'entrée d'un dispositif 12 de prédiction de l'effet Doppler sur le code et la porteuse qui reçoit également des informations additionnelles transmises par le récepteur 10 à partir des signaux provenant des satellites et les décalages de code et de porteuse provenant du filtre de canal 11. Les informations additionnelles 8 transmises par le récepteur 10 au dispositif 12 de prédiction de l'effet Doppler comportent des données d'éphémérides et une estimation d'erreur de propagation qui permettent de déduire une approximation du retard de propagation des signaux provenant des satellites, ce retard étant introduit notamment par la ionosphère, la troposphère et par l'horloge du satellite. Le dispositif 12 de prédiction de l'effet Doppler délivre en sortie, des nouvelles valeurs de commande de position des horloges de code et de phase à appliquer à l'ensemble des canaux, 1 à N, pour corriger simultanément et conjointement par une même valeur, à chaque itération, la position des corrélateurs ponctuel Cp, avance Ca et retard Cr dans tous les canaux du récepteur 10. De même que pour l'architecture de boucle vectorisée, dans cette architecture d'hybridation INS/GNSS, la position des corrélateurs de tous les canaux est gérée en commun par le filtre de canal 11 et les signaux de sortie des discriminateurs 21 de code DSC et de porteuse DSP ne sont pas contraints.

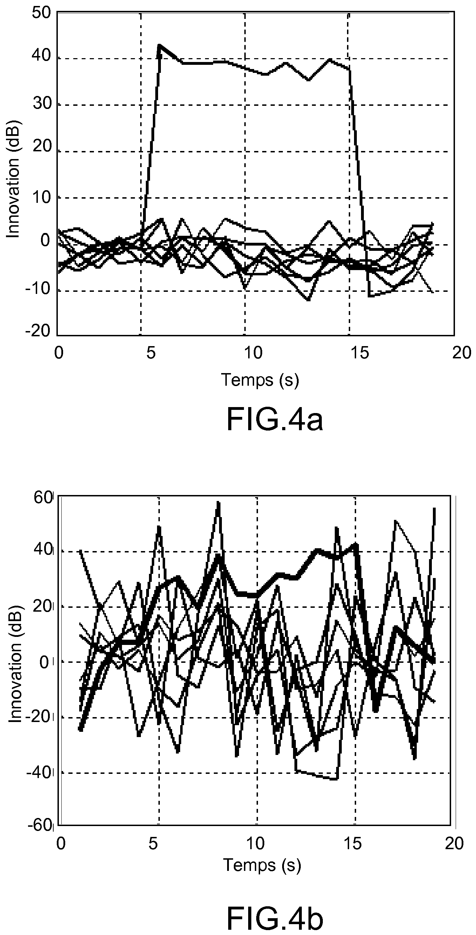

Les figures 4a et 4b représentent deux exemples de courbes illustrant l'évolution, en fonction du temps, des paramètres innovation délivrés en sortie d'un filtre de Kalman d'une architecture d'hybridation de type couplage ultra-serré, pour des signaux bruités dans lesquels les niveaux du rapport signal sur bruit C/N0 sont respectivement de 40dBHz et 19dBHz. Sur ces deux figures, les signaux en traits fins correspondant à des trajets directs entre un satellite et un récepteur de positionnement par satellite, ont un paramètre innovation qui fluctue autour de la valeur zéro, alors qu'un signal erroné, représenté en trait épaissi, dû par exemple à un trajet multiple, c'est-à-dire à un trajet qui a été réfléchi par un obstacle situé entre un satellite et le récepteur de positionnement par satellite, n'est pas centré autour de la valeur zéro. Lorsque le rapport signal sur bruit C/N0 est important, comme le montre la figure 4a, le signal erroné peut être clairement identifié car il est complètement décalé par rapport aux autres signaux. Pour des bruits plus importants correspondant à un rapport signal sur bruit C/N0 plus faible, comme le montre la figure 4b, le signal erroné est noyé dans les fluctuations des autres signaux et ne peut pas être clairement identifié. Les figures 4a et 4b montrent donc que le paramètre innovation ne permet d'identifier les signaux erronés qu'en présence d'un bruit d'intensité beaucoup plus faible que le niveau du signal. Plus le niveau de bruit est important par rapport au niveau du signal, plus il est difficile d'identifier les signaux erronés avec le paramètre innovation.

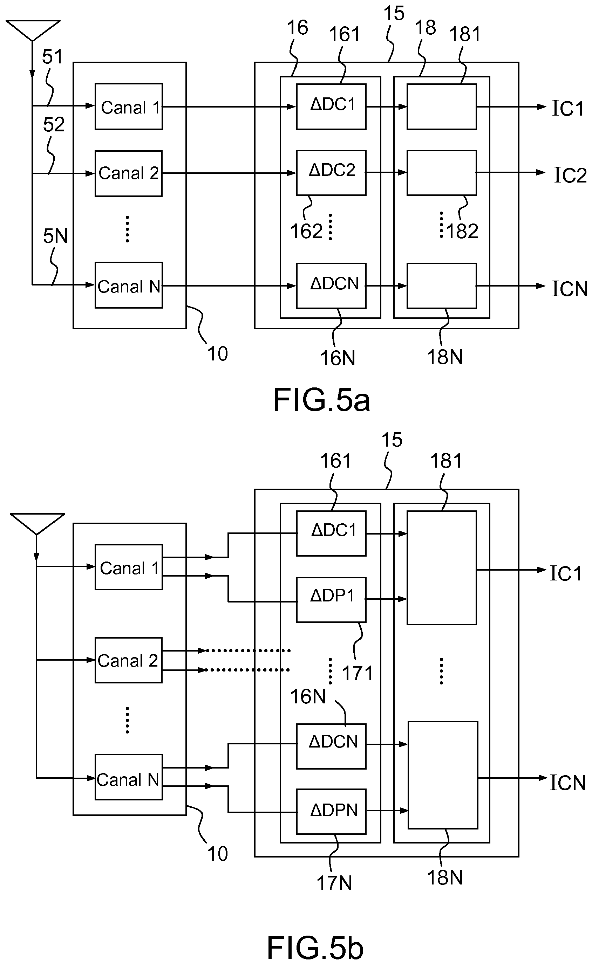

Les figures 5a et 5b représentent deux exemples d'architectures d'un système de détection d'anomalie sur des signaux de navigation GNSS, la figure 5a ne couvrant pas un exemple couvert par la présente invention. Le système de détection d'anomalie comporte un récepteur 10 de positionnement par satellite et un dispositif 15 de détection d'anomalie. Le récepteur 10 comprend une pluralité de canaux 1 à N de traitement différents, chaque canal de traitement étant dédié à un satellite et comportant un discriminateur 21 de porteuse et de code délivrant un écart de phase de porteuse et un écart de code entre le signal reçu du satellite correspondant et le signal local. Dans le cas où le récepteur 10 est intégré dans une architecture de boucle vectorisée ou dans une architecture d'hybridation de type couplage ultra-serré, les discriminateurs 21 de code et de porteuse du récepteur 10 ne sont pas contraints à une valeur de sortie proche de zéro et leurs variations sont donc représentatives des fluctuations des signaux reçus par le récepteur 10. Ainsi, plus la valeur délivrée par un discriminateur est élevée par rapport à la valeur zéro, plus le signal reçu par le récepteur 10 a un risque d'être erroné. L'invention consiste alors à exploiter les valeurs délivrées par les discriminateurs 21 pour identifier et éliminer les signaux erronés. Pour cela, comme représenté sur la figure 5a, le dispositif 15 de détection d'anomalie comporte un dispositif de comparaison 16 incluant une première valeur de seuil S1 et connecté en sortie de tous les discriminateurs 21, et un dispositif 18 d'identification d'erreur de mesure connecté en sortie du dispositif de comparaison 16. Le dispositif de comparaison 16 comporte un premier ensemble de N comparateurs 161, 162,...16N correspondant aux N canaux 1 à N. Le premier ensemble de N comparateurs 161 à 16N est destiné à recevoir l'ensemble des valeurs d'écart de code DCi, où i est un nombre entier compris entre 1 et N, délivrées par les discriminateurs 21 de tous les canaux 1 à N du récepteur 10, à comparer les valeurs d'écart de code délivrées par chaque discriminateur 21 à la même première valeur de seuil S1 et à délivrer les résultats de la comparaison sur une pluralité de sorties correspondant chacune à l'un des canaux de réception 1 à N du récepteur 10. La première valeur de seuil S1 est définie par l'utilisateur et correspond à une valeur maximale d'écart de code que l'utilisateur est prêt à accepter en sortie des discriminateurs 21. Le dispositif 18 d'identification d'erreur de mesure comporte N canaux d'identification d'erreur 181, 182,...18N reliés en sortie du premier ensemble de N comparateurs161 à 16N. Le dispositif 18 d'identification d'erreur de mesure est destiné, à partir des résultats ΔDCi, où i est compris entre 1 et N, de chaque comparaison, à attribuer un indicateur de confiance IC1, IC2,...ICN sur la fiabilité de chaque signal 51, 52, ...5N reçu et à identifier les signaux de navigation erronés c'est-à-dire les signaux correspondant à un indicateur de confiance de faible valeur inférieure à un indicateur de confiance minimal ICmin.

Comme représenté sur la figure 5b, le dispositif de comparaison 16 comporte un deuxième ensemble de N comparateurs 171, à 17N incluant une deuxième valeur de seuil S2 et connecté en sortie de tous les discriminateurs 21. Le dispositif de comparaison 16 peut alors comparer les valeurs d'écart de phase DPi, où i est compris entre 1 et N, délivrées par chaque discriminateur 21 à ladite même deuxième valeur de seuil S2 et le dispositif 18 d'identification d'erreur peut, à partir des résultats de chaque comparaison, déterminer les écarts de phase DPi supérieurs à la deuxième valeur de seuil S2. Dans ce cas, l'indicateur de confiance IC1 à ICN attribué à chaque signal reçu est déterminé en prenant en compte les résultats ΔDCi et ΔDPi, où i est compris entre 1 et N, des comparaisons issus d'une part des écarts de code DCi et d'autre part des écarts de phase DPi par rapport à la première, respectivement à la deuxième, valeur de seuil S1, S2.

Le dispositif de détection d'anomalie 15 peut être utilisé pour uniquement obtenir une information sur la fiabilité des mesures de positions reportées par le récepteur 10. Dans ce cas, le calcul du paramètre innovation est inchangé et déterminé par le filtre de canal 11 à partir de l'ensemble des signaux de navigation GNSS.

L'identification des signaux erronés étant réalisée en sortie des discriminateurs 21 de code DSC et de phase DSP de chaque canal par comparaison de chaque signal délivré par les discriminateurs, indépendamment des autres signaux, à une même première valeur de seuil S1 et éventuellement à une même deuxième valeur de seuil S2, le dispositif de détection d'anomalie 15 peut aussi être utilisé pour exclure les signaux erronés en amont du filtre de canal 11 et réaliser, dans le filtre de canal 11, un calcul d'innovation uniquement à partir des valeurs d'erreur de code DCi et les valeurs d'erreur de phase de porteuse DPi des signaux estimés fiables. La position des corrélateurs est alors déterminée avec une plus grande précision que dans l'art antérieur où tous les signaux, y compris les signaux erronés, sont utilisés dans le filtre de canal 11 pour calculer le paramètre innovation, et où les signaux erronés sont plus difficiles à détecter.

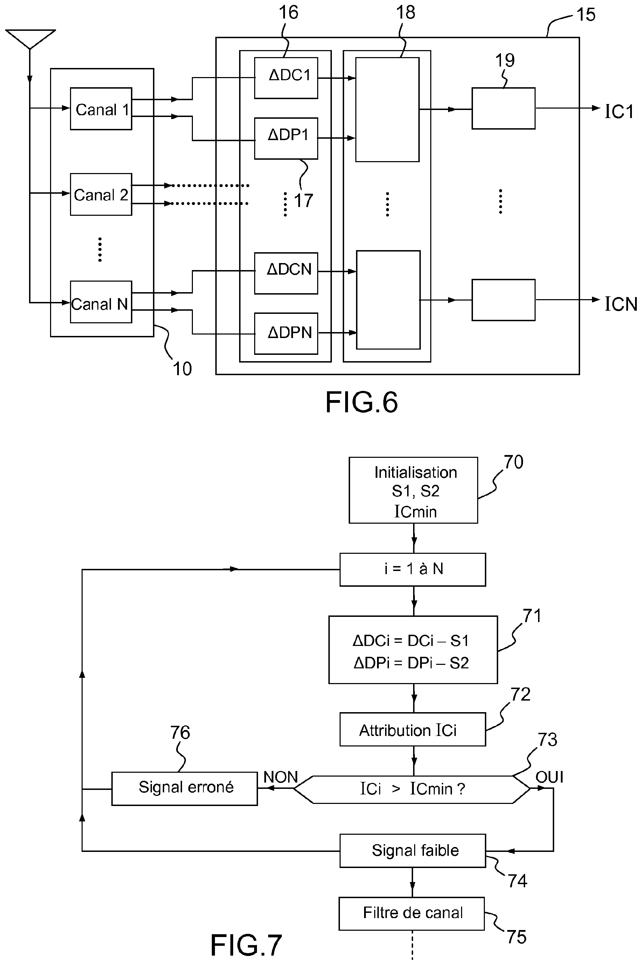

Dans ce cas, comme représenté sur la figure 6, selon l'invention, le dispositif de détection d'anomalie 15 comporte en outre un dispositif additionnel, appelé dispositif de sélection 19, comportant une pluralité d'entrées connectées aux différentes sorties du dispositif d'identification d'erreur 18 et une pluralité de sorties destinées à être connectées au filtre de canal 11. Le dispositif de sélection 19 est destiné à sélectionner les signaux ayant un indicateur de confiance supérieur à un indicateur de confiance minimal ICmin prédéterminé au-dessous duquel un signal de navigation est estimé erroné et à transmettre uniquement les signaux sélectionnés au filtre de canal 11 de l'architecture de boucle vectorisée ou de l'architecture INS/GNSS. Le calcul du paramètre innovation dans le filtre de canal 11 est alors réalisé, dans le cas de l'architecture de boucle vectorisée, en ne prenant en compte que l'ensemble des informations extraites des signaux de navigation GNSS ayant été estimés comme fiables et, dans le cas de l'architecture d'hybridation INS/GNSS, en ne prenant en compte que l'ensemble des informations extraites des signaux GNSS ayant été estimés comme fiables et des informations issues de la centrale inertielle 14.

La figure 7 représente un exemple d'algorithme de détection d'anomalie et de sélection des signaux GNSS fiables. Dans une première étape d'initialisation 70, les première et deuxième valeurs de seuil S1 et S2 et la valeur de l'indicateur de confiance minimal ICmin sont choisies. Dans une deuxième étape 71, les valeurs d'écart de code DCi et DPi délivrés en sortie des discriminateurs 21 de chaque canal i du récepteur GNSS 10, où i est un nombre entier compris entre 1 et N, sont respectivement comparées aux première et deuxième valeurs de seuil S1 et S2, les résultats de chaque comparaison étant notés ΔDCi, respectivement ΔDPi. Dans une troisième étape 72, à partir des résultats ΔDCi et ΔDPi de chaque comparaison, un indicateur de confiance IC1, IC2,...ICN sur la fiabilité de chaque signal 51, 52, ...5N reçu est attribué à chaque canal i. Dans une quatrième étape 73, un test de comparaison est réalisé entre chaque indicateur de confiance ICi attribué à chaque canal i et l'indicateur de confiance minimal ICmin. Lorsque le test de comparaison indique que l'indicateur de confiance ICi attribué au canal i est supérieur à l'indicateur de confiance minimal ICmin, le signal est identifié comme fiable dans l'étape 74 et sélectionné pour être transmis au filtre de canal 11 dans l'étape 75, lorsque le système de détection d'anomalie est intégré dans une architecture de boucle vectorisée ou dans une architecture d'hybridation. Dans le cas contraire, le signal est identifié comme erroné dans l'étape 76 et n'est pas transmis au filtre de canal 11.

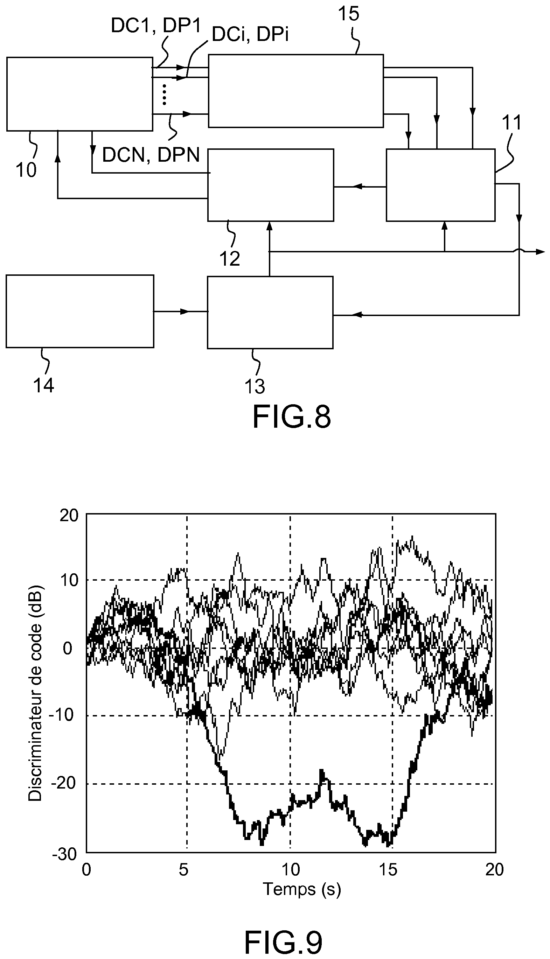

La figure 8 représente un exemple d'architecture d'hybridation incluant un dispositif de détection d'anomalie et de sélection des signaux GNSS fiables, selon l'invention. Cette architecture comporte les mêmes dispositifs et la même structure que l'architecture représentée sur la figure 3 et comporte en outre un dispositif 15 de détection d'anomalie et de sélection des signaux GNSS fiables connecté entre le récepteur 10 et le filtre de canal 11. Le dispositif 15 de détection d'anomalie et de sélection des signaux GNSS fiables extrait les valeurs d'erreur de code DC1 à DCN et les valeurs d'erreur de phase de porteuse DP1 à DPN délivrées en sortie des discriminateurs 21 du récepteur GNSS 10, les compare aux première et deuxième valeurs de seuil respectives S1, S2, en déduit un indicateur de confiance IC1 à ICN et sélectionne et transmet seulement les valeurs d'erreur de code DC1 à DCN et les valeurs d'erreur de phase de porteuse DP1 à DPN des signaux estimés comme fiables au filtre de canal 11.

La figure 9 représente un exemple de courbe illustrant l'évolution, en fonction du temps des sorties des discriminateurs de code d'un récepteur de positionnement par satellite 10, le récepteur 10 étant intégré dans une architecture d'hybridation de type couplage ultra-serré, pour des signaux bruités dans lesquels le niveau du rapport signal sur bruit C/N0 est égal à 19dBHz. Dans cette configuration, comme décrit ci-dessus en liaison avec les figures 5 et 6, les corrélateurs sont commandés ensemble à partir d'une estimation conjointe de leur décalage de code, de sorte que les discriminateurs délivrent des signaux d'erreur qui ne sont pas contraints à une valeur proche de zéro. Cette figure 9 montre que même lorsque le niveau de bruit est fort par rapport au niveau du signal, les signaux erronés délivrés en sortie des discriminateurs de code de chaque canal se distinguent très clairement des signaux fiables et peuvent être aisément détectés en les comparant à un seuil. Le seuil est choisi en fonction de l'application souhaitée. Le seuil peut par exemple correspondre à une probabilité de fausse alarme ou à une précision de mesure de position et de vitesse souhaitées. Sur la figure 9, un seuil de -20dB permet de détecter le signal représenté en traits épaissis et correspondant à un signal erroné.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre défini par les revendications annexées.

## Revendications

1. Procédé de détection d'anomalie sur des signaux de navigation reçus par N canaux de réception d'un récepteur (10) de positionnement par satellites, où N est un nombre entier supérieur à 1, chaque canal i, où i est compris entre 1 et N, comportant un circuit de corrélation de porteuse (20), un circuit de corrélation de code (22) incluant des corrélateurs ponctuel (Cp), avance (Ca) et retard (Cr), un discriminateur de code (DSC), un discriminateur de phase de porteuse (DSP), les discriminateurs de code (DSC) et de phase de porteuse (DSP) étant connectés à un filtre de canal (11) commun apte à gérer, conjointement, la position des corrélateurs ponctuel (Cp), avance (Ca) et retard (Cr) des N canaux de réception pour réduire des valeurs d'erreur de code (DCi) et de phase de porteuse (DPi) délivrées par les discriminateurs de code et de phase de porteuse (DSC, DSP), **caractérisé en ce qu'**il consiste à extraire les valeurs d'erreur de code (DCi) délivrées en sortie des N discriminateurs de code (DSC), à comparer (71) les valeurs d'erreur de code (DCi) extraites à une même première valeur de seuil (S1) correspondant à une valeur d'erreur de code maximale acceptable, à extraire des valeurs d'erreur de phase de porteuse (DPi) délivrées en sortie des N discriminateurs de phase de porteuse (DSP), à comparer (71) les valeurs d'erreur de phase de porteuse (DPi) extraites à une même deuxième valeur de seuil (S2) correspondant à une valeur d'erreur de phase maximale acceptable et à attribuer (72) un indice de confiance (ICi) à chaque signal de navigation reçu sur chaque canal de réception, l'indice de confiance (ICi) dépendant des résultats de la comparaison réalisée sur les valeurs d'erreur de code (DCi) et sur les valeurs d'erreur de phase de porteuse (DPi), et à sélectionner (73, 74) des signaux de navigation ayant un indice de confiance (ICi) supérieur à un niveau de confiance minimal (ICmin) de référence et à transmettre (75) au filtre de canal (11) uniquement les signaux de navigation sélectionnés.

2. Système de détection d'anomalie sur des signaux de navigation comportant un récepteur (10) de positionnement par satellite à N canaux de réception, où N est un nombre entier supérieur à 1, chaque canal i, où i est compris entre 1 et N, comportant un circuit de corrélation de porteuse (20), un circuit de corrélation de code (22) incluant des corrélateurs ponctuel (Cp), avance (Ca) et retard (Cr), un discriminateur de code (DSC), un discriminateur de phase de porteuse (DSP), les discriminateurs de code (DSC) et de phase de porteuse (DSP) étant connectés à un filtre de canal (11) commun apte à gérer, conjointement, la position des corrélateurs ponctuel (Cp), avance (Ca) et retard (Cr) des N canaux de réception pour réduire des valeurs d'erreur de code (DCi) et de phase de porteuse (DPi) délivrées par les discriminateurs de code et de phase de porteuse (DSC, DSP), **caractérisé en ce que** le système comporte en outre un dispositif (15) de détection d'anomalie sur les signaux de navigation comportant au moins un dispositif de comparaison (16) comportant un premier ensemble de N comparateurs (161 à 16N) respectivement connectés en sortie des N discriminateurs de code (DSC) des N canaux du récepteur (10) et un dispositif (18) d'attribution d'un indice de confiance de fiabilité (IC1 à ICN) connecté en sortie des N comparateurs (161 à 16N) du dispositif de comparaison (16), le dispositif de comparaison (16) incluant une première valeur de seuil (S1) correspondant à une valeur d'erreur de code maximale acceptable , le dispositif de comparaison (16) comportant en outre un deuxième ensemble de N comparateurs (171 à 17N) respectivement connectés en sortie des N discriminateurs de phase de porteuse (DSC) des N canaux du récepteur (10) et **en ce que** le dispositif (18) d'attribution d'un indice de confiance de fiabilité (IC1 à ICN) est connecté en sortie du premier et du deuxième ensemble de N comparateurs (161 à 16N), (171 à 17N) du dispositif de comparaison (16), le dispositif de comparaison (16) incluant en outre une deuxième valeur de seuil (S2) correspondant à une valeur d'erreur de phase de porteuse maximale acceptable et l'indice de confiance (IC1 à ICN) étant attribué à chaque signal de navigation reçu sur chaque canal de réception en fonction du résultat de la comparaison réalisée sur les valeurs d'erreur de code (DCi) et sur les valeurs d'erreur de phase de porteuse (DPi) et délivré par le dispositif de comparaison (16), le dispositif de détection d'anomalie (15) étant connecté entre les discriminateurs (21) du récepteur (10) et le filtre de canal (11) et **en ce que** le dispositif de détection d'anomalie (15) comporte en outre un dispositif de sélection (19) des signaux de navigation , le dispositif de sélection étant connecté en sortie du dispositif (18) d'attribution de l'indice de fiabilité et en entrée du filtre de canal (11), le dispositif de sélection des signaux de navigation étant apte à sélectionner les signaux de navigation ayant un indice de confiance (ICi) supérieur au niveau de confiance minimal (ICmin) de référence et à transmettre au filtre de canal (11) uniquement les valeurs d'erreur de code (DCi) et les valeurs d'erreur de phase de porteuse (DPi) des signaux de navigation sélectionnés.

3. Système d'hybridation INS/GNSS **caractérisé en ce qu'**il comporte un système de détection d'anomalie sur des signaux de navigation selon la revendication 2 et une centrale inertielle.

## Patentansprüche

1. Verfahren zum Erkennen von Anomalien in Navigationssignalen, die von N Empfangskanälen eines Satellitenpositionierungsempfängers (10) empfangen werden, wobei N eine ganze Zahl größer als 1 ist, wobei jeder Kanal i, wobei i zwischen 1 und N liegt, eine Trägerkorrelationsschaltung (20), eine Codekorrelationsschaltung (22) einschließend Spot- (Cp), Vorlauf- (Ca) und Nachlaufkorrelatoren (Cr), einen Codediskriminator (DSC), einen Trägerphasendiskriminator (DSP) umfasst, wobei der Code- (DSC) und der Trägerphasendiskriminator (DSP) mit einem gemeinsamen Kanalfilter (11) verbunden sind, das dazu geeignet ist, die Position der Spot- (Cp), Vorlauf- (Ca) und Nachlauf- (Cr) -Korrelatoren der N Empfangskanäle gemeinsam zu verwalten, um die von den Code- und Trägerphasendiskriminatoren (DSC, DSP) gelieferten Code- (DCi) und Trägerphasenfehlerwerte (DPi) zu reduzieren, **dadurch gekennzeichnet, dass** es darin besteht, die am Ausgang der N Codediskriminatoren (DSC) gelieferten Codefehlerwerte (DCi) zu extrahieren, die extrahierten Codefehlerwerte (DCi) mit einem gleichen ersten Schwellenwert (S1) entsprechend einem akzeptablen maximalen Codefehlerwert zu vergleichen (71), die am Ausgang der N Trägerphasendiskriminatoren (DSP) gelieferten Trägerphasenfehlerwerte (DPi) zu extrahieren, die extrahierten Trägerphasenfehlerwerte (DPi) mit einem gleichen zweiten Schwellenwert (S2) entsprechend einem akzeptablen maximalen Codefehlerwert zu vergleichen (71) und jedem auf jedem Empfangskanal empfangenen Navigationssignal einen Vertrauensindex (ICi) zuzuordnen (72), wobei der Vertrauensindex (ICi) von den Ergebnissen des an den Codefehlerwerten (DCi) und an den Trägerphasenfehlerwerten (DPi) durchgeführten Vergleichs abhängt, und Auswählen (73, 74) von Navigationssignalen die einen Vertrauensindex (ICi) aufweisen, der größer als ein minimales Referenzkonfidenzniveau (ICmin) ist, und Übertragen (75) nur der ausgewählten Navigationssignale zum Kanalfilter (11).

2. System zur Erkennung von Anomalien in Navigationssignalen die einen Satellitenpositionierungsempfänger (10) mit N Empfangskanälen umfasst, wobei N eine ganze Zahl größer als 1 ist, wobei jeder Kanal i, wobei i zwischen 1 und N liegt, eine Trägerkorrelationsschaltung (20), eine Codekorrelationsschaltung (22) einschließend Spot- (Cp), Vorlauf- (Ca) und Nachlaufkorrelatoren (Cr), einen Codediskriminator (DSC), einen Trägerphasendiskriminator (DSP) umfasst, wobei der Code- (DSC) und der Trägerphasendiskriminator (DSP) mit einem gemeinsamen Kanalfilter (11) verbunden sind, das dazu geeignet ist, die Position der Spot- (Cp), Vorlauf- (Ca) und Nachlaufkorrelatoren (Cr) der N Empfangskanäle gemeinsam zu verwalten, um die von den Code- und Trägerphasendiskriminatoren (DSC, DSP) gelieferten Codefehler- (DCi) und Trägerphasenfehlerwerte (DPi) zu reduzieren, **dadurch gekennzeichnet, dass** das System ferner eine Vorrichtung (15) zur Erkennung von Anomalien in den Navigationssignalen umfasst, die mindestens eine Vergleichsvorrichtung (16) umfassend einen ersten Satz von N Komparatoren (161 bis 16N), die jeweils mit dem Ausgang der N Codediskriminatoren (DSC) der N Kanäle des Empfängers (10) verbunden sind, und eine Vorrichtung (18) zum Zuordnen eines Zuverlässigkeitsvertrauensindex (IC1 bis ICN) umfasst, die mit dem Ausgang der N Komparatoren (161 bis 16N) der Vergleichsvorrichtung (16) verbunden ist, wobei die Vergleichsvorrichtung (16) einen ersten Schwellenwert (S1) entsprechend einem maximal akzeptablen Codefehlerwert einschließt, wobei die Vergleichsvorrichtung (16) ferner einen zweiten Satz von N Komparatoren (171 bis 17N) umfasst, die jeweils mit dem Ausgang der N Trägerphasendiskriminatoren (DSC) der N Kanäle des Empfängers (10) verbunden sind, und dadurch, dass die Vorrichtung (18) zum Zuordnen eines Zuverlässigkeitsvertrauensindex (IC1 bis ICN) mit dem Ausgang des ersten und zweiten Satzes von N Komparatoren (161 bis 16N), (171 bis 17N) der Vergleichsvorrichtung (16) verbunden ist, wobei die Vergleichsvorrichtung (16) ferner einen zweiten Schwellenwert (S2) entsprechend einem maximal akzeptablen Trägerphasenfehlerwert einschließt, und wobei der Vertrauensindex (IC1 bis ICN) jedem auf jedem Empfangskanal empfangenen Navigationssignal in Abhängigkeit von dem Ergebnis des Vergleichs der Codefehlerwerte (DCi) und der Trägerphasenfehlerwerte (DPi) zugeordnet und von der Vergleichsvorrichtung (16) geliefert wird, wobei die Anomalieerkennungsvorrichtung (15) zwischen den Diskriminatoren (21) des Empfängers (10) und dem Kanalfilter (11) geschaltet ist, und dadurch, dass die Anomalieerkennungsvorrichtung (15) ferner eine Auswahlvorrichtung (19) für Navigationssignale umfasst, wobei die Auswahlvorrichtung mit dem Ausgang der Vorrichtung (18) zum Zuordnen des Zuverlässigkeitsindex und mit dem Eingang des Kanalfilters (11) verbunden ist, wobei die Navigationssignalauswahlvorrichtung dazu geeignet ist, die Navigationssignale auszuwählen die einen Vertrauensindex (ICi) aufweisen , der höher ist als das minimale Referenzkonfidenzniveau (ICmin), und nur die Codefehlerwerte (DCi) und die Trägerphasenfehlerwerte (DPi) der ausgewählten Navigationssignale an den Kanalfilter (11) weiterzuleiten.

3. INS/GNSS-Hybridisierungssystem, **dadurch gekennzeichnet, dass** es ein System zur Erkennung von Anomalien in Navigationssignalen nach Anspruch 2 und eine Trägheitseinheit umfasst.

## Claims

1. Method for detecting anomalies on navigation signals received by N reception channels of a satellite positioning receiver (10), where N is an integer number greater than 1, each channel i, where i is between 1 and N, comprising a carrier correlation circuit (20), a code correlation circuit (22) including spot (Cp), advance (Ca) and delay (Cr) correlators, a code discriminator (DSC), a carrier phase discriminator (DSP), the code (DSC) and carrier phase (DSP) discriminators being connected to a common channel filter (11) suitable for managing, jointly, the position of the spot (Cp), advance (Ca) and delay (Cr) correlators of the N reception channels to reduce code (DCi) and carrier phase (DPi) error values delivered by the code and carrier phase discriminators (DSC, DSP), **characterised in that** it consists in extracting the code error values (DCi) delivered at the output of the N code discriminators (DSC), in comparing (71) the extracted code error values (DCi) with a same first threshold value (S1) corresponding to an acceptable maximum code error value, in extracting carrier phase error values (DPi) delivered at the output of the N carrier phase discriminators (DSP), in comparing (71) the extracted carrier phase error values (DPi) with a same second threshold value (S2) corresponding to an acceptable maximum code error value and in assigning (72) a confidence index (ICi) to each navigation signal received on each reception channel, the confidence index (ICi) depending on the results of the comparison carried out on the code error values (DCi) and on the carrier phase error values (DPi), and to select (73, 74) navigation signals having a confidence index (ICi) greater than a minimal reference confidence level (ICmin) and to transmit (75) only the selected navigation signals to the channel filter (11).

2. System for detecting anomalies on navigation signals comprising a satellite positioning receiver (10) with N reception channels, where N is an integer number greater than 1, each channel i, where i is between 1 and N, comprising a carrier correlation circuit (20), a code correlation circuit (22) including spot (Cp), advance (Ca) and delay (Cr) correlators, a code discriminator (DSC), a carrier phase discriminator (DSP), the code (DSC) and carrier phase (DSP) discriminators being connected to a common channel filter (11) suitable for managing, jointly, the position of the spot (Cp), advance (Ca) and delay (Cr) correlators of the N reception channels to reduce code (DCi) and carrier phase (DPi) error values delivered by the code and carrier phase discriminators (DSC, DSP), **characterized in that** the system further comprises a device (15) for detecting anomalies on the navigation signals comprising at least one comparison device (16) comprising a first set of N comparators (161 to 16N) respectively connected to the output of the N code discriminators (DSC) of the N channels of the receiver (10) and a device (18) for assigning a reliability confidence index (IC1 to ICN) connected to the output of the N comparators (161 to 16N) of the comparison device (16), the comparison device (16) including a first threshold value (S1) corresponding to an acceptable maximum code error value, the comparison device (16) further comprising a second set of N comparators (171 to 17N) respectively connected to the output of the N carrier phase discriminators (DSC) of the N channels of the receiver (10) and **in that** the device (18) for assigning a reliability confidence index (IC1 to ICN) is connected to the output of the first and the second set of N comparators (161 to 16N), (171 to 17N) of the comparison device (16), the comparison device (16) further including a second threshold value (S2) corresponding to an acceptable maximum carrier phase error value and the confidence index (IC1 to ICN) being assigned to each navigation signal received on each reception channel as a function of the result of the comparison carried out on the code error values (DCi) and on the carrier phase error values (DPi) and delivered by the comparison device (16), the anomaly detection device (15) being connected between the discriminators (21) of the receiver (10) and the channel filter (11) and **in that** the anomaly detection device (15) further comprises a device (19) for selecting navigation signals, the selection device being connected to the output of the device (18) for assigning the reliability index and to the input of the channel filter (11), the device for selecting navigation signals being suitable for selecting the navigation signals that have a confidence index (ICi) higher than the reference minimum confidence level (ICmin) and for transmitting to the channel filter (11) only the code error values (DCi) and the carrier phase error values (DPi) of the selected navigation signals.

3. INS/GNSS hybridization system, **characterized in that** it comprises a system for detecting anomalies on navigation signals according to claim 2 and an inertial unit.
